# FASCICULE DE BREVET EUROPEEN

(11) **EP 3 680 878 B1**
(45) Date de publication et mention de la délivrance du brevet: **02.08.2023**
(21) Numéro de dépôt: 19216524.9
(22) Date de dépôt: 16.12.2019
(51) Int. Cl.: G08G 5/00, G08G 5/06, G08G 5/02, G01S 19/42, G01S 1/02

(54) **PROCÉDÉ ET SYSTÈME DE GÉNÉRATION DE DONNÉES OPÉRATIONNELLES RELATIVES A DES DÉPLACEMENTS D'AÉRONEF DANS UNE INFRASTRUCTURE AÉROPORTUAIRE**
VERFAHREN UND SYSTEM ZUR ERZEUGUNG VON OPERATIONELLEN DATEN FÜR LUFTFAHRZEUGBEWEGUNGEN IN EINER FLUGHAFENINFRASTRUKTUR
METHOD AND SYSTEM FOR GENERATING OPERATIONAL DATA RELATING TO THE MOVEMENTS OF AN AIRCRAFT IN AN AIRPORT INFRASTRUCTURE

(30) Priorité: 08.01.2019 FR 1900155
(43) Date de publication de la demande: 15.07.2020
(73) Titulaire: AIRBUS (SAS), 31707 Blagnac (FR)
(72) Inventeur: CAMBON, Guillaume, 31880 La Salvetat Saint-Gilles (FR); ROCHDI, Abdelmouise, 46150 Gzoula (MA)
(74) Mandataire: Gevers & Orès

(56) Documents cités:
- EP-A1- 3 007 152
- CN-A- 106 157 699
- US-A- 5 574 648
- US-A1- 2010 185 426
- US-A1- 2012 245 836
- US-A1- 2013 027 226
- US-A1- 2017 178 420
- US-A1- 2018 155 052
- US-A1- 2019 108 758
- US-B2- 7 729 263
- US-B2- 9 171 476
- US-B2- 9 934 620
- LEVY B S ET AL: "Objective and automatic estimation of excess taxi-times", INTEGRATED COMMUNICATIONS, NAVIGATION AND SURVEILLANCE CONFERENCE, 2008. ICNS 2008, IEEE, PISCATAWAY, NJ, USA, 5 mai 2008 (2008-05-05), pages 1-10, XP031283424, ISBN: 978-1-4244-2303-3
- Airbus: "Getting to grips with datalink", Customer Services, 1 March 2003 (2003-03-01), pages 1-201, XP055470709, Retrieved from the Internet: URL:https://www.cockpitseeker.com/wp-conte nt/uploads/goodies/ac/a320/pdf/data/datali nk.pdf [retrieved on 2018-04-26]
- ZHANG YU ET AL: "Methods for determining unimpeded aircraft taxiing time and evaluating airport taxiing performance", CHINESE JOURNAL OF AERONAUTICS, ELSEVIER, AMSTERDAM, NL, vol. 30, no. 2, 15 February 2017 (2017-02-15), pages 523-537, XP029984174, ISSN: 1000-9361, DOI: 10.1016/J.CJA.2017.01.002

## Description

### DOMAINE TECHNIQUE

La présente invention concerne un procédé et un système de génération de données opérationnelles à des déplacements d'aéronef dans une infrastructure aéroportuaire.

### ÉTAT DE LA TECHNIQUE

On sait qu'il existe des systèmes permettant de générer des données opérationnelles des infrastructures aéroportuaires. On entend par infrastructure aéroportuaire un ensemble d'équipements (pistes, points de stationnement, voies de roulage, ...) d'un aéroport. De tels systèmes exploitent des données de position et de vol émises par des transpondeurs agencés dans des aéronefs se trouvant sur et à proximité de l'infrastructure aéroportuaire. Ces données de position et de vol sont émises par les aéronefs en vol et au sol et elles sont enregistrées, en temps réel, dans des bases de données de suivi de vol. À partir de ces données de position et de vol, lesdits systèmes extraient des données opérationnelles. On entend par données opérationnelles, des informations variées sur les opérations effectuées dans l'aéroport, par exemple le temps et l'utilisation de certains équipements. Ces informations apportent des renseignements sur les caractéristiques globales et les contraintes spécifiques de chaque infrastructure aéroportuaire.

La demande de brevet européen EP 3 007 152 A1 divulgue par exemple un système et procédé permettant de déterminer des moments « in-time », « out-time », « off-time » et « on-time » d'un aéronef. Ces moments correspondent respectivement au moment où l'aéronef arrive à sa position de parking, au moment où l'aéronef quitte sa position de parking, le moment où l'aéronef n'est plus en contact avec la piste d'atterrissage et le moment où l'aéronef touche la piste d'atterrissage.

Cependant, les données de position transmises par les transpondeurs des aéronefs peuvent se révéler imprécises. Ainsi, les données de position émises par un aéronef à l'arrêt peuvent être interprétées comme celles émises par un aéronef en mouvement. Les données de position d'un aéronef stationnant à une porte peuvent également être interprétées comme celles émises par l'aéronef à une porte différente.

Par ailleurs, les transpondeurs des aéronefs émettent les données de position à des intervalles réguliers représentés par une date et une heure précises. Les données opérationnelles issues des dates et des heures d'émission de données de position erronées sont alors également faussées.

Une interprétation des données opérationnelles peut donc se révéler incorrecte. Cette solution usuelle n'est donc pas complètement satisfaisante.

### EXPOSÉ DE L'INVENTION

La présente invention a pour but de remédier à cet inconvénient.

Pour ce faire, elle concerne un procédé de génération de données opérationnelles d'au moins une infrastructure aéroportuaire.

Selon l'invention, le procédé comprend les étapes suivantes :
- une étape d'acquisition, mise en oeuvre par un module d'acquisition, consistant à acquérir et à transmettre des ensembles de données de suivi de déplacement pour une pluralité d'aéronefs présents dans un volume de détection de dimensions prédéterminées autour de l'infrastructure aéroportuaire, chacun desdits ensembles de données de suivi de déplacement étant associé à l'un desdits aéronefs, chacun desdits ensembles de données de suivi de déplacement comprenant des données de position successives et des données de vol de l'aéronef considéré, une pluralité de données de vol étant associée à chacune desdites données de position ;
- une première étape d'identification, mise en oeuvre par un premier module d'identification, consistant à identifier une trajectoire pour chacun desdits aéronefs à partir de l'ensemble de données de suivi de déplacement dudit aéronef considéré, d'au moins une voie de roulage de l'infrastructure aéroportuaire et d'au moins une zone de stationnement de l'infrastructure aéroportuaire ;
- une seconde étape d'identification, mise en oeuvre par un second module d'identification, consistant à identifier par découpage des trajectoires en phases de déplacement au sol et à transmettre, pour chacune desdites trajectoires respectant des conditions prédéterminées, une ou plusieurs phases, chacune desdites phases étant associée à des données de phases, des données de position et des données de vol de chacun desdits aéronefs ;
- une étape de génération, mise en oeuvre par un module de génération, consistant à générer une pluralité de premiers ensembles de données opérationnelles et une pluralité de seconds ensembles de données opérationnelles, chacun desdits premiers ensembles de données opérationnelles comprenant les données de vol et les données de phases associées à l'un desdits aéronefs, chacun desdits seconds ensembles de données opérationnelles comprenant les données de position desdits aéronefs ; et
- une étape de transmission, mise en oeuvre par un module de transmission, consistant à transmettre lesdits premiers ensembles de données opérationnelles et lesdits seconds ensembles de données opérationnelles à un système utilisateur;
les données de phases étant un identifiant de phase, un rang de phase dans la trajectoire d'un aéronef AC, une heure de début de phase et une heure de fin de phase, une durée de phase, un type de phase, une heure de départ ou d'arrivée à une zone de stationnement ZT ou sur une voie de roulage R.

Ainsi, grâce à l'invention, on obtient des données opérationnelles précises. En effet, les trajectoires des aéronefs pris en compte doivent satisfaire plusieurs critères prédéterminés qui éliminent des données de positions et/ou de vol potentiellement erronées. De plus, le découpage des trajectoires des aéronefs en phases de déplacement permet de ne considérer que certaines parties de trajectoires. Ce découpage crée non seulement un filtre supplémentaire dans les données de positions et de vol mais il permet également de définir un nouveau type de données utilisables dans la génération de données opérationnelles.

Avantageusement, le procédé comprend une première étape de détermination, mise en oeuvre antérieurement à la première étape d'identification par un premier module de détermination, consistant à déterminer et à transmettre, à partir d'un premier ensemble de données d'infrastructures comprenant des coordonnées d'équipements de l'infrastructure aéroportuaire, au moins une voie de roulage, ladite première étape de détermination consistant également à transmettre des données de position de ladite ou desdites voies de roulage.

De façon avantageuse, dans un mode de réalisation particulier, l'étape d'acquisition comprend également une sous-étape de sélection, mise en oeuvre par un sous-module de sélection, consistant à sélectionner les ensembles de données de suivi de déplacement de chacun desdits aéronefs dont le nombre de données de position est supérieur à un nombre seuil prédéterminé et pour transmettre les ensembles de suivi de déplacement sélectionnés.

Par ailleurs, avantageusement, le procédé comprend une seconde étape de détermination, mise en oeuvre antérieurement à la première étape d'identification par un second module de détermination, consistant à déterminer et à transmettre, à partir d'un second ensemble de données d'infrastructures comprenant des coordonnées d'équipements de l'infrastructure aéroportuaire, au moins une zone de stationnement, ladite seconde étape de détermination consistant également à transmettre des données de position de ladite ou desdites zones de stationnement.

En outre, dans un mode de réalisation particulier, la seconde étape de détermination comprend la succession de sous-étapes suivantes :
- une sous-étape de définition, mise en oeuvre par un sous-module de définition, consistant à définir, pour une pluralité de points de stationnement, une zone de recherche autour de chacun desdits points de stationnement dont les coordonnées sont définies dans le second ensemble de données d'infrastructures ;
- une sous-étape de génération, mise en oeuvre par un sous-module de génération, consistant à générer un agrégat de positions d'aéronefs proches de chacun des points de stationnement à partir de données de position d'entraînement vérifiant une pluralité de critères prédéterminés ;
- une sous-étape de filtrage, mise en oeuvre par un sous-module de filtrage, consistant à éliminer les agrégats de positions d'aéronefs dont la distance entre un centre de l'agrégat et le point de stationnement le plus proche est supérieur à une distance prédéterminée ; et
- une sous-étape d'association, mise en oeuvre par un sous-module d'association, consistant à associer chacun des agrégats de positions d'aéronefs qui n'est pas éliminé à une zone de stationnement.

Par ailleurs, avantageusement, une phase comprend au moins :
- un premier type de phase de déplacement d'un aéronef comprenant un trajet entre une donnée de position initiale dans une première zone de stationnement et une donnée de position finale dans une seconde zone de stationnement ;
- un deuxième type de phase de déplacement d'un aéronef comprenant un trajet entre une donnée de position initiale dans une zone de stationnement et une donnée de position finale dans au moins une voie de roulage ; et
- un troisième type de phase de déplacement d'un aéronef comprenant un trajet entre une donnée de position initiale dans au moins une voie de roulage et une donnée de position finale dans une zone de stationnement.

La présente invention concerne également un système de génération de données opérationnelles d'au moins une infrastructure aéroportuaire.

Selon l'invention, ledit système comporte :
- un module d'acquisition configuré pour acquérir et pour transmettre des ensembles de données de suivi de déplacement pour une pluralité d'aéronefs présents dans un volume de détection de dimensions prédéterminées autour de l'infrastructure aéroportuaire, chacun desdits ensembles de données de suivi de déplacement étant associé à l'un desdits aéronefs, chacun desdits ensembles de données de suivi de déplacement comprenant des données de position successives et des données de vol de l'aéronef considéré, une pluralité de données de vol étant associée à chacune desdites données de position ;
- un premier module d'identification configuré pour identifier une trajectoire pour chacun desdits aéronefs à partir de l'ensemble de données de suivi de déplacement dudit aéronef considéré, d'au moins une voie de roulage de l'infrastructure aéroportuaire et d'au moins une zone de stationnement de l'infrastructure aéroportuaire ;
- un second module d'identification configuré pour identifier par découpage des trajectoires en phases de déplacement au sol et pour transmettre, pour chacune desdites trajectoires respectant des conditions prédéterminées, une ou plusieurs phases, chacune desdites phases étant associée à des données de phases, des données de position et des données de vol de chacun desdits aéronefs ;

- un module de génération configuré pour générer une pluralité de premiers ensembles de données opérationnelles et une pluralité de seconds ensembles de données opérationnelles, chacun desdits premiers ensembles de données opérationnelles comprenant les données de vol et les données de phases associées à l'un desdits aéronefs, chacun desdits seconds ensembles de données opérationnelles comprenant les données de position desdits aéronefs ; et
- un module de transmission configuré pour transmettre lesdits premiers ensembles de données opérationnelles et lesdits seconds ensembles de données opérationnelles à un système utilisateur;
les données de phases étant un identifiant de phase, un rang de phase dans la trajectoire d'un aéronef AC, une heure de début de phase et une heure de fin de phase, une durée de phase, un type de phase, une heure de départ ou d'arrivée à une zone de stationnement ZT ou sur une voie de roulage R.

Par ailleurs, avantageusement, le système comporte :
- un premier module de détermination configuré pour déterminer au moins une voie de roulage, à partir d'un premier ensemble de données d'infrastructures et pour transmettre des données de position de ladite ou desdites voies de roulage ; et
- un second module de détermination configuré pour déterminer au moins une zone de stationnement à partir d'un second ensemble de données d'infrastructures et pour transmettre des données de position de ladite ou desdites zones de stationnement.

De façon avantageuse, dans un mode de réalisation particulier, le module d'acquisition comporte également un sous-module de sélection configuré pour sélectionner les ensembles de données de suivi de déplacement de chacun desdits aéronefs dont le nombre de données de position est supérieur à un nombre seuil prédéterminé et pour transmettre les ensembles de suivi de déplacement sélectionnés.

De plus, avantageusement, le second module de détermination comporte :
- un sous-module de définition configuré pour définir, pour une pluralité de point de stationnement, une zone de recherche autour de chacun desdits points de stationnement dont les coordonnées sont définies dans le second ensemble de données d'infrastructures ;
- un sous-module de génération configuré pour générer un agrégat de positions d'aéronefs proches de chacun des points de stationnement à partir de données de position d'entraînement vérifiant une pluralité de critères prédéterminés ;
- un sous-module de filtrage configuré pour éliminer les agrégats de positions d'aéronefs dont la distance entre un centre de l'agrégat et le point de stationnement le plus proche est supérieur à une distance prédéterminée ; et
- un sous-module d'association configuré pour associer chacun des agrégats de positions d'aéronefs qui n'est pas éliminé à une zone de stationnement.

### BRÈVE DESCRIPTION DES FIGURES

Les figures annexées feront bien comprendre comment l'invention peut être réalisée. Sur ces figures, des références identiques désignent des éléments semblables.
La figure 1 est un schéma synoptique d'un mode de réalisation particulier d'un système de génération de données opérationnelles d'une infrastructure aéroportuaire.
La figure 2 est un schéma synoptique d'un mode de réalisation particulier d'un procédé de génération de données opérationnelles d'une infrastructure aéroportuaire.
La figure 3 illustre une vue de dessus d'une partie des équipements d'une infrastructure aéroportuaire.
La figure 4 illustre une vue de dessus d'un ensemble d'agrégats de positions d'aéronefs et de points de stationnement.
La figure 5 représente une vue de dessus de différentes phases de déplacement d'un aéronef dans un partie d'infrastructure aéroportuaire.

### DESCRIPTION DÉTAILLÉE

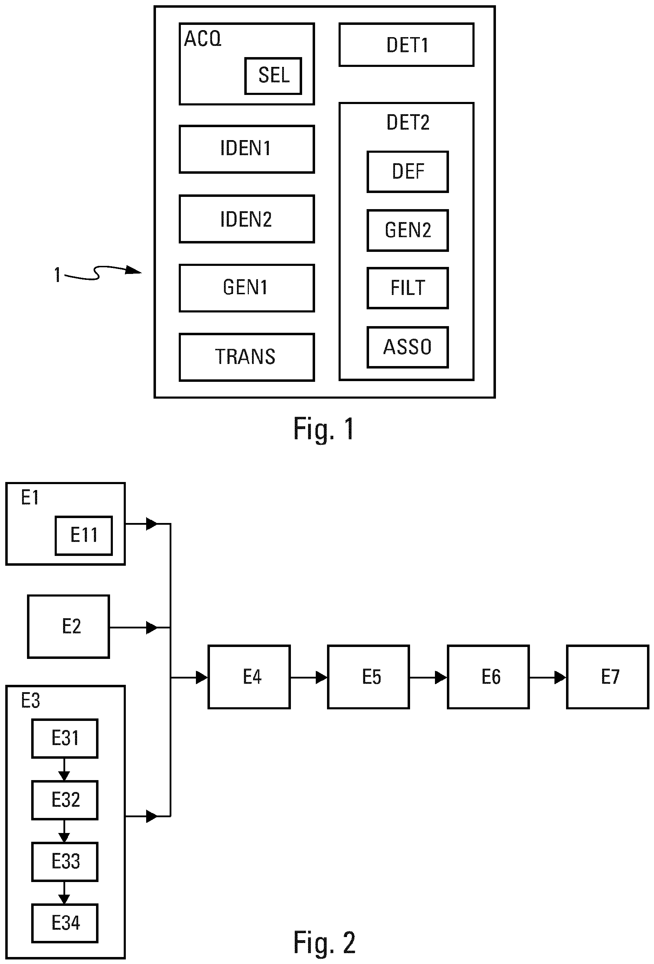

Le système de génération de données opérationnelles 1 (ci-après « système 1 »), représenté schématiquement dans un mode de réalisation particulier sur la figure 1, est destiné à générer des données opérationnelles d'au moins une infrastructure aéroportuaire.

Dans le cadre de la présente invention, on entend par infrastructure aéroportuaire, l'ensemble ou une partie des équipements présents sur un aéroport tels que des points de stationnement (parking ou porte d'embarquement/de débarquement de terminal), des portes, des pistes et des voies de circulation, cette liste n'étant pas exhaustive.

Par ailleurs, on entend par données opérationnelles, des données relatives, par exemple, au taux d'occupation d'une piste particulière par un type d'aéronef AC particulier, les voies de circulation préférentielles pour accéder ou sortir d'une piste, le temps moyen passé par un aéronef AC à une porte, les voies de circulation congestionnées, les types d'aéronef AC stationnant à un poste de stationnement particulier,... Les données opérationnelles sont relatives aux déplacements d'un ou de plusieurs aéronefs AC dans et à proximité d'une infrastructure aéroportuaire.

Comme représenté sur la figure 1, le système 1 comprend un module d'acquisition ACQ qui est apte à acquérir des ensembles de données de suivi de déplacement à partir d'une base de données de suivi de vol (non représentée).

La base de données de suivi de vol enregistre en temps réel des données de position successives (c'est-à-dire les positions de l'aéronef AC à des intervalles temporels réguliers) et des données de vol. Ces données de position et de vol sont transmises par un élément de transmission présent dans chaque aéronef AC. Les données de position et de vol sont généralement transmises tant que l'aéronef AC est sous tension. À titre d'exemple, l'élément de transmission d'un aéronef AC est un transpondeur de type ADS-B (« Automatic Dépendance Surveillance - Broadcast » en anglais). Les données de position sont des coordonnées d'altitude, de longitude et de latitude de l'aéronef AC déterminées par un système de positionnement par satellites de type GNSS (« Global Navigation Satellite System » en anglais). À chaque donnée de position d'un aéronef AC sont associées des données de vol qui comprennent certaines des données suivantes : numéro de vol, identifiant de vol, type d'aéronef AC, vitesse, heure, date, numéro de série de l'aéronef AC,...

Dans un mode de réalisation préféré, le module d'acquisition ACQ est apte à acquérir, à partir de la base données de suivi de vol, les données de position successives et les données de vol de chaque aéronef AC présent dans un volume de détection (non représenté) autour de l'infrastructure aéroportuaire. Le volume de détection comprend des dimensions prédéterminées. À titre d'exemple, les dimensions prédéterminées sont de 17000 pieds de hauteur et de 30 milles nautiques de diamètre au sol.

Les données de position et les données de vol associées à chaque aéronef AC présent dans le volume de détection forment un ensemble de données de suivi de déplacement.

Dans un mode de réalisation particulier, le module d'acquisition ACQ comprend également un sous-module de sélection SEL. Ce sous-module de sélection SEL sélectionne, parmi les ensembles de données de suivi de déplacement acquis par le module d'acquisition ACQ, le ou les ensembles de données de suivi de déplacement dont le nombre de données de position est supérieur à un nombre seuil prédéterminé. À titre d'exemple, le nombre seuil prédéterminé est égal à 50.

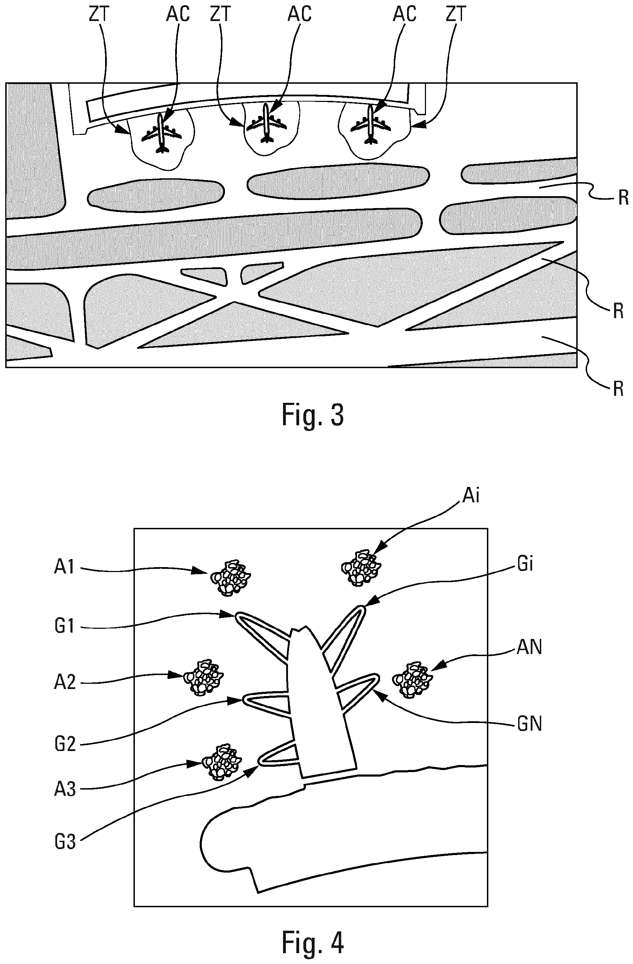

Par ailleurs, comme représenté sur la figure 1, le système comprend un module de détermination DET1 configuré pour déterminer une ou plusieurs voies de roulage R (voir figure 3) à partir d'un premier ensemble de données d'infrastructures. Ce premier ensemble de données d'infrastructures peut être compris dans une base de données de l'infrastructure aéroportuaire. Le premier ensemble de données d'infrastructures comprend des coordonnées de latitude et de longitude de certains équipements de l'infrastructure aéroportuaire. Ces équipements correspondent à des voies de roulage R, par exemple, des pistes (d'atterrissages et de décollages), des voies de circulation entre deux pistes, ...

À partir des valeurs des coordonnées d'extrémités de ces équipements, le module de détermination DET1 est apte à déterminer des données de position de voie de roulage R. Ces données de position sont associées à chaque voie de roulage R déterminée. Le module de détermination DET1 est également apte à transmettre ces données de position de voie de roulage R.

Comme représenté sur la figure 1, dans un mode de réalisation préféré, le système 1 comprend également un module de détermination DET2. Le module de détermination DET2 est configuré pour déterminer une ou plusieurs zones de stationnement ZT, à partir des coordonnées de certains équipements de l'infrastructure aéroportuaire. Ces coordonnées font partie d'un second ensemble de données d'infrastructures.

Ce second ensemble de données d'infrastructure peut être intégré dans la base de données de l'infrastructure aéroportuaire. Les coordonnées des équipements compris dans le second ensemble de données d'infrastructures représentent les valeurs de la latitude et de la longitude de points de stationnement Gi avec i=1,...,N, et N étant un entier. Les points de stationnement Gi peuvent être des portes d'embarquement ou de débarquement (voir figure 4).

Dans un mode de réalisation particulier, le module de détermination DET2 comporte un sous-module de définition DEF, un sous-module de génération GEN2, un sous-module de filtrage FILT et un sous-module d'association ASSO.

Comme représenté sur la figure 1, le sous-module de définition DEF est configuré pour définir une zone de recherche autour de chaque point de stationnement Gi. La probabilité de présence du point de stationnement Gi dans la zone de recherche est pondérée par une loi gaussienne centrée sur les coordonnées du point de stationnement Gi. Des valeurs de positions suivant une loi normale peuvent également être introduites dans la distribution de probabilité pour définir la zone de recherche.

Par ailleurs, le sous-module de génération GEN2 est configuré pour générer un agrégat Ai de positions d'aéronefs avec i=1, ...N. Comme représenté sur la figure 4, chaque agrégat Ai est généré à proximité d'un point stationnement Gi. La génération de l'agrégat Ai de positions d'aéronefs requiert des données de position dites d'entraînement. Ces données de position d'entraînement représentent des données de position d'aéronefs AC qui vérifient plusieurs critères prédéterminés. Ces critères prédéterminés sont, par exemple :
- l'aéronef AC est présent à la surface de l'infrastructure aéroportuaire ;
- la valeur de l'altitude de l'aéronef AC est nulle ;
- la valeur de la vitesse de l'aéronef AC est nulle ; et
- les valeurs des coordonnées de longitude et de latitude correspondent à des valeurs de données de position de la zone de recherche associée au point de stationnement Gi.

Les données de position d'entraînement peuvent être sélectionnées parmi des données de position de la base de données de suivi de vol.

De plus, le sous-module de filtrage FILT est apte à calculer une distance entre un centre de l'agrégat Ai de positions d'aéronef AC, généré par le sous-module de génération GEN2, et le ou les points de stationnement Gi les plus proches. Le centre d'un agrégat Ai de positions d'aéronef AC peut avoir pour coordonnées, le barycentre géométrique des coordonnées de chaque position d'aéronefs de l'agrégat généré.

Le sous-module de filtrage FILT est configuré pour éliminer les agrégats Ai de positions d'aéronef AC dont la distance entre leur centre et chacun des points de stationnement Gi est supérieur à une valeur prédéterminée. Cette valeur prédéterminée est déterminée statistiquement pour chaque infrastructure aéroportuaire. Elle peut correspondre à la somme de l'écart type et de la moyenne des distances entre les centres des agrégats et chaque point de stationnement Gi le plus proche.

Le sous-module d'association ASSO est configuré pour associer chaque agrégat Ai de positions d'aéronef AC, qui n'a pas été éliminé par le sous-module de filtrage FILT, à une zone de stationnement ZT représentée par des données de position de zone de stationnement.

En outre, le module de détermination DET2 est apte à transmettre les données de position de zone de stationnement.

Dans un autre mode de réalisation (non représenté), le module de détermination DET2 détermine les zones de stationnement ZT par l'intermédiaire de moyens permettant à un opérateur d'identifier des aires de l'infrastructure aéroportuaire sur une carte.

Par ailleurs, dans un mode de réalisation préféré, le système 1 comprend également un module d'identification IDEN1. Ce module d'identification IDEN1 est apte à identifier une trajectoire pour chaque aéronef AC présent dans le volume de détection. Une trajectoire est définie à partir d'un ensemble de données de suivi de déplacement reçu du module d'acquisition ACQ, des données de position de voies de roulage reçues du module de détermination DET1 et des données des positions de zone de stationnement reçues du module de détermination DET2.

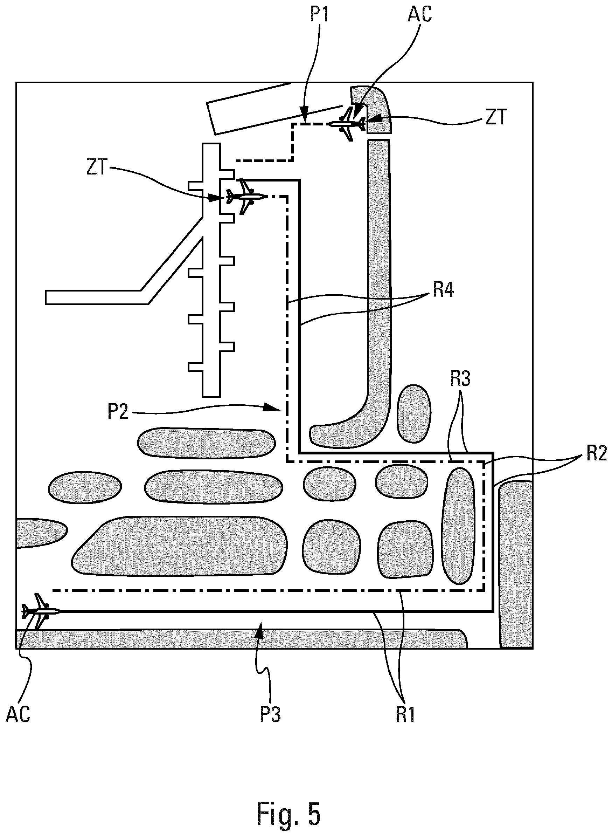

Dans le cadre de cette invention, on entend par trajectoire, une succession de données de position émises par un aéronef AC présent dans le volume de détection et dont certaines données de position correspondent à des données de position de voies de roulage et des données de position de zones de stationnement. À titre d'exemple, une trajectoire représente le vol d'atterrissage d'un aéronef AC sur une voie de roulage R puis continue par une succession d'autres voies de roulage R1, R2, R3, R4 jusqu'à une zone de stationnement ZT. La trajectoire de l'aéronef AC se poursuit, par exemple, par son déplacement vers une zone de stationnement ZT différente et enfin par une succession de voie de roulage R en vue du décollage de l'aéronef AC, comme représenté sur la figure 5.

À titre d'exemple, une trajectoire représente le déplacement d'un aéronef AC d'une zone de stationnement ZT (une porte d'embarquement de passager) vers une piste de décollage, en passant par une succession de voies de roulage R (non représentée).

En outre, dans un mode de réalisation préféré, le système 1 comporte un module d'identification IDEN2 configuré pour identifier une ou plusieurs phases pour chaque trajectoire identifiée par le module d'identification IDEN1 qui vérifie des conditions prédéterminées. Une des conditions prédéterminées implique que deux données de position successives d'un aéronef AC en mouvement sur une voie de roulage R ne doivent pas être associées à des heures d'émission de données séparées par un temps supérieur à une certaine valeur seuil. À titre d'exemple, cette valeur seuil est égale à cinq minutes.

Par ailleurs, une phase est représentée par une succession de données de position et de données de vol représentant un aéronef AC. Comme représenté sur la figure 5, une phase peut représenter :
- un premier type de phase P1 de déplacement d'un aéronef AC comprenant un trajet au sol entre une donnée de position initiale qui se trouve dans une première zone de stationnement ZT et une donnée de position finale dans une seconde zone de stationnement ZT. À titre d'exemple, ce type de phase P1 représente le déplacement d'un aéronef AC entre deux portes d'embarquement ;
- un deuxième type de phase P2 de déplacement d'un aéronef AC comprenant un trajet au sol entre une donnée de position initiale dans une zone de stationnement ZT et une donnée de position finale dans au moins une voie de roulage R. À titre d'exemple, ce type de phase P2 représente le déplacement d'un aéronef AC depuis une porte d'embarquement vers une piste en vue de son décollage ; et
- un troisième type de phase P3 de déplacement d'un aéronef AC comprenant un trajet au sol entre une donnée de position initiale dans au moins une voie de roulage R et une donnée de position finale dans une zone de stationnement ZT. Ce type de phase P3 représente le déplacement d'un aéronef AC d'une piste sur laquelle il a atterri vers une porte de débarquement.

À titre d'exemple, le déplacement d'un aéronef AC qui a atterri sur une piste, se déplace jusqu'à une porte, par exemple en vue du débarquement de passagers, se déplace à nouveau vers une autre porte, en vue de l'embarquement de nouveaux passagers puis emprunte des voies de circulation en vue d'un nouveau décollage est représenté par une seule trajectoire. Comme représenté sur la figure 5, il est également représenté par un type de phase P3 de déplacement, un type de phase P1 de déplacement et un type de phase P2 de déplacement.

Dans un mode de réalisation préféré, le module d'identification IDEN2 est également configuré pour associer à chaque phase de données de phases en complément des données de position et des données de vol associées à l'aéronef AC. Ces données de phases peuvent être un identifiant de phase, un rang de phase dans la trajectoire d'un aéronef AC, une heure de début de phase et une heure de fin de phase, une durée de phase, un type de phase, une heure de départ ou d'arrivée à une zone de stationnement ZT ou sur une voie de roulage R,...

Dans un mode de réalisation préféré, le système 1 comprend, de plus, un module de génération GEN1. Ce module de génération GEN1 est configuré pour générer des ensembles de données opérationnelles, à partir des données de phases, des données de position et des données de vol transmises par le module d'identification IDEN 2. Plus particulièrement, le module de génération GEN1 est apte à générer un premier ensemble de données opérationnelles comprenant les données de vol et les données de phases de chaque aéronef AC et un second ensemble de données opérationnelles comprenant les données de position et au moins un identifiant de la phase de chaque aéronef AC.

Par ailleurs, dans un mode de réalisation préféré, le système 1 comprend un module de transmission TRANS, apte à transmettre les ensembles de données opérationnelles à un système utilisateur. À titre d'exemple, un système utilisateur est une unité d'affichage permettant à un opérateur de visualiser les ensembles de données opérationnelles. Le système utilisateur peut également comporter une mémoire dans laquelle sont enregistrés les ensembles de données opérationnelles.

Le système 1, tel que décrit ci-dessus, est susceptible de mettre en oeuvre un procédé de génération de données opérationnelles d'au moins une infrastructure aéroportuaire.

Le procédé comprend une pluralité d'étapes E1 à E7, comme représenté sur la figure 2.

Au cours d'une étape d'acquisition E1, des ensembles de données de suivi de déplacement d'aéronefs AC présents dans un volume de détection sont acquis par le module d'acquisition ACQ. Un ensemble de données de suivi de déplacement comprend, pour un aéronef AC particulier, des données de vol et des données de position dans le volume de détection. Plusieurs données de vol sont associées à chaque donnée de position.

L'étape d'acquisition E1 comprend, dans un mode de réalisation particulier, une sous-étape de sélection E11 qui consiste à sélectionner chacun des ensembles de données de suivi de déplacement d'aéronefs AC comprenant un nombre de données de position supérieur à un nombre seuil prédéterminé. Un nombre important de données de position garantit que les déplacements de l'aéronef AC dans le volume de détection sont correctement suivis. De plus, la sous-étape de sélection E11 permet de limiter la taille des données transmises au module d'identification IDEN1.

Par ailleurs, plusieurs voies de roulage R sont déterminées au cours d'une étape de détermination E2. À partir d'un premier ensemble de données d'infrastructure qui comprend les coordonnées des extrémités d'une voie de roulage R et une valeur de sa largeur, on détermine la surface de la voie de roulage R.

En outre, au cours d'une étape de détermination E3, des zones de stationnement ZT sont déterminées par le module de détermination DET2. Ces zones de stationnement ZT sont déterminées à partir d'un second ensemble de données d'infrastructure. Ce second ensemble de données d'infrastructures comprend des coordonnées de plusieurs équipements dont des points de stationnement Gi. Ces points de stationnement Gi peuvent être des portes.

Dans un mode de réalisation particulier, représenté sur la figure 2, les données de position des zones de stationnement sont déterminées au cours d'une pluralité de sous-étapes E31 à E34 réalisées successivement pour la pluralité de points de stationnement Gi.

Au cours d'une sous-étape de définition E31, une zone de recherche est définie par le sous-module de définition DEF autour de chaque point de stationnement Gi. La densité de probabilité de présence d'un point de stationnement Gi dans la zone de recherche suit une loi gaussienne centrée sur les coordonnées du point de stationnement Gi. De plus, un certain nombre de valeurs de densité de présence qui suivent une loi normale et qui sont centrées sur les valeurs des coordonnées du point de stationnement Gi sont ajoutées afin de définir la zone de recherche.

Puis, lors d'une sous-étape de génération E32, le sous-module de génération GEN2 génère un agrégat Ai de positions d'aéronefs AC à proximité ou sur chaque point de stationnement Gi, comme représenté sur la figure 4. La génération de chaque agrégat Ai est réalisée par un algorithme d'apprentissage automatique qui requiert des données de position d'entraînement. Ces données de position d'entraînement représentent des données de position d'aéronef AC vérifiant plusieurs critères prédéterminés. Ces données de position représentent notamment des aéronefs AC avec une vitesse et une hauteur nulles et présents dans la zone de recherche.

Au cours d'une sous-étape de filtrage E33, la distance entre un centre de l'agrégat Ai généré et le point de stationnement Gi le plus proche est calculée. Si la distance est supérieure à une distance prédéterminée, l'agrégat Ai ne comprend pas la position réelle du point de stationnement Gi et il est éliminé. Si la distance est inférieure à la distance prédéterminée, l'agrégat Ai comprend la position réelle du point de stationnement Gi. L'agrégat Ai est alors associé à une zone de stationnement ZT lors d'une sous-étape d'association E34. Les données de position des zones de stationnement sont alors transmises au module d'identification IDEN1.

En considérant une zone de stationnement ZT, le module de détermination DET2 permet de minimiser les erreurs sur les données de position de chacun des aéronefs AC en se basant sur l'historique des données de position de plusieurs aéronefs AC à chaque point de stationnement Gi de l'infrastructure aéroportuaire.

Au cours d'une étape d'identification E4, une trajectoire d'aéronef AC est alors identifiée, par le module d'identification IDEN1. La trajectoire d'un aéronef AC est représentée par la succession de données de position d'un ensemble de données de suivi de déplacement transmis par le module d'acquisition ACQ. La trajectoire est également identifiée à partir des données de position des voies de roulage R et des zones de stationnement ZT transmises, respectivement, par le module de détermination DET1 et le module de détermination DET2.

Si une ou plusieurs données de position de l'aéronef correspondent à une ou plusieurs des données de position d'une voie de roulage R, alors, la trajectoire de l'aéronef AC comprend cette voie de roulage R. Par ailleurs, si une ou plusieurs données de position de l'aéronef AC correspondent à une ou plusieurs données de position d'une zone de stationnement ZT, alors la zone de stationnement ZT est comprise dans la trajectoire de l'aéronef AC. Une trajectoire d'aéronef AC peut comprendre plusieurs voies de roulage R et plusieurs zones de stationnement ZT.

Comme représenté sur la figure 2, au cours d'une étape d'identification E5, le module d'identification IDEN2 identifie une ou plusieurs phases dans chacune des trajectoires d'aéronefs AC vérifiant certaines conditions prédéterminées citées précédemment.

Une trajectoire d'aéronef AC qui vérifie des conditions prédéterminées peut représenter le vol d'atterrissage de l'aéronef sur une piste, puis son déplacement jusqu'à une première zone de stationnement ZT (une porte de débarquement). La trajectoire se poursuit ensuite avec le trajet au sol de l'aéronef AC vers une seconde zone de stationnement ZT et enfin le trajet au sol de l'aéronef AC vers une piste en vue de son prochain décollage.

Comme représenté sur la figure 5, le module d'identification IDEN2 identifie, dans cette trajectoire, plusieurs phases successives, à savoir un type de phase P3, un type de phase P1 et un type de phase P2. À titre d'exemple, les types de phases P2 et P3 comprennent le trajet au sol de l'aéronef sur les voies de roulage R1, R2, R3 et R4,

Le découpage de chaque trajectoire en phase permet une identification claire des déplacements de chacun des aéronefs AC dans l'infrastructure aéroportuaire, notamment des déplacements entre zones de stationnement ZT.

Par ailleurs, chaque phase est représentée par des données de phases, ainsi que les données de vol et les données de position d'aéronef AC. Ces données de phase, de vol et de position sont ensuite transmises au module de génération GEN1.

Au cours d'une étape de génération E6, le module de génération GEN1 génère des premiers ensembles de données opérationnelles et des seconds ensembles de données opérationnelles.

Chacun des premiers ensembles de données opérationnelles comprend des données de vol et des données de phases associée à un aéronef AC. À titre d'exemple, un premier ensemble de données opérationnelles comprend des données représentatives des heures et des dates d'entrée et de sortie de l'aéronef AC d'une zone de stationnement ZT particulière.

Chacun des seconds ensembles de données opérationnelles comprend les données de position de chaque aéronef AC auquel est associé un premier ensemble de données opérationnelles.

Ces premiers et seconds ensembles de données opérationnelles sont transmis, par le module de transmission TRANS, au cours d'une étape de transmission E7 à un système utilisateur. Le système utilisateur peut être une base de données, une unité d'enregistrement, une interface homme/machine comprenant un écran de visualisation des données opérationnelles.

À partir des premiers et seconds ensembles de données opérationnelles, un utilisateur peut obtenir des informations telles que :
- le taux d'occupation d'une piste particulière par un type d'aéronef AC particulier ;
- la durée moyenne de stationnement d'un aéronef AC, c'est-à-dire, entre deux phases au sol ;
- l'identification de phases entre deux zones de stationnement ZT ;
- la durée de chaque type de phase P1, P2, P3 ; et
- les infrastructures préférentielles utilisées par un type d'aéronef AC ou une compagnie aérienne.

## Revendications

1. Procédé de génération de données opérationnelles d'au moins une infrastructure aéroportuaire, comprenant les étapes suivantes :
- une étape d'acquisition (E1), mise en oeuvre par un module d'acquisition (ACQ), consistant à acquérir et à transmettre des ensembles de données de suivi de déplacement pour une pluralité d'aéronefs (AC) présents dans un volume de détection de dimensions prédéterminées autour de l'infrastructure aéroportuaire, chacun desdits ensembles de données de suivi de déplacement étant associé à l'un desdits aéronefs (AC), chacun desdits ensembles de données de suivi de déplacement comprenant des données de position successives et des données de vol de l'aéronef (AC) considéré, une pluralité de données de vol étant associée à chacune desdites données de position ;
- une première étape d'identification (E4), mise en oeuvre par un premier module d'identification (IDEN1), consistant à identifier une trajectoire pour chacun desdits aéronefs (AC) à partir de l'ensemble de données de suivi de déplacement dudit aéronef (AC) considéré, d'au moins une voie de roulage (R) de l'infrastructure aéroportuaire et d'au moins une zone de stationnement (ZT) de l'infrastructure aéroportuaire ;
- une seconde étape d'identification (E5), mise en oeuvre par un second module d'identification (IDEN2), consistant à identifier par découpage des trajectoires en phases de déplacement au sol et à transmettre, pour chacune desdites trajectoires respectant des conditions prédéterminées, une ou plusieurs phases, chacune desdites phases étant associée à des données de phases, des données de position et des données de vol de chacun desdits aéronefs (AC) ;
- une étape de génération (E6), mise en oeuvre par un module de génération (GEN1), consistant à générer une pluralité de premiers ensembles de données opérationnelles et une pluralité de seconds ensembles de données opérationnelles, chacun desdits premiers ensembles de données opérationnelles comprenant les données de vol et les données de phases associées à l'un desdits aéronefs (AC), chacun desdits seconds ensembles de données opérationnelles comprenant les données de position desdits aéronefs (AC) ; et
- une étape de transmission (E7), mise en oeuvre par un module de transmission (TRANS), consistant à transmettre lesdits premiers ensembles de données opérationnelles et lesdits seconds ensembles de données opérationnelles à un système utilisateur,
les données de phases étant un identifiant de phase, un rang de phase dans la trajectoire d'un aéronef AC, une heure de début de phase et une heure de fin de phase, une durée de phase, un type de phase, une heure de départ ou d'arrivée à une zone de stationnement ZT ou sur une voie de roulage R.

2. Procédé selon la revendication 1, comprenant une première étape de détermination (E2), mise en oeuvre antérieurement à la première étape d'identification (E4) par un premier module de détermination (DET1), consistant à déterminer et à transmettre, à partir d'un premier ensemble de données d'infrastructures comprenant des coordonnées d'équipements de l'infrastructure aéroportuaire, au moins une voie de roulage (R), ladite première étape de détermination (E2) consistant également à transmettre des données de position de ladite ou desdites voies de roulage (R).

3. Procédé selon l'une quelconque des revendications 1 et 2, en ce que l'étape d'acquisition (E1) comprend également une sous-étape de sélection (E11), mise en oeuvre par un sous-module de sélection (SEL), consistant à sélectionner les ensembles de données de suivi de déplacement de chacun desdits aéronefs (AC) dont le nombre de données de position est supérieur à un nombre seuil prédéterminé et pour transmettre les ensembles de suivi de déplacement sélectionnés.

4. Procédé selon l'une quelconque des revendications précédentes, comprenant une seconde étape de détermination (E3), mise en oeuvre antérieurement à la première étape d'identification (E4) par un second module de détermination (DET2), consistant à déterminer et à transmettre, à partir d'un second ensemble de données d'infrastructures comprenant des coordonnées d'équipements de l'infrastructure aéroportuaire, au moins une zone de stationnement (ZT), ladite seconde étape de détermination (E3) consistant également à transmettre des données de position de ladite ou desdites zones de stationnement (ZT).

5. Procédé selon la revendication 4, en ce que la seconde étape de détermination (E3) comprend la succession de sous-étapes suivantes :
- une sous-étape de définition (E31), mise en oeuvre par un sous-module de définition (DEF), consistant à définir, pour une pluralité de points de stationnement (Gi), une zone de recherche autour de chacun desdits points de stationnement (Gi) dont les coordonnées sont définies dans le second ensemble de données d'infrastructures ;
- une sous-étape de génération (E32), mise en oeuvre par un sous-module de génération (GEN2), consistant à générer un agrégat (Ai) de positions d'aéronefs (AC) proches de chacun des points de stationnement (Gi) à partir de données de position d'entraînement vérifiant une pluralité de critères prédéterminés ;
- une sous-étape de filtrage (E33), mise en oeuvre par un sous-module de filtrage (FILT), consistant à éliminer les agrégats (Ai) de positions d'aéronefs (AC) dont la distance entre un centre de l'agrégat (Ai) et le point de stationnement (Gi) le plus proche est supérieur à une distance prédéterminée ; et
- une sous-étape d'association (E34), mise en oeuvre par un sous-module d'association (ASSO), consistant à associer chacun des agrégats (Ai) de positions d'aéronefs (AC) qui n'est pas éliminé à une zone de stationnement (ZT).

6. Procédé selon l'une quelconque des revendications précédentes, en ce qu'une phase comprend au moins :
- un premier type de phase (P1) de déplacement d'un aéronef (AC) comprenant un trajet entre une donnée de position initiale dans une première zone de stationnement (ZT) et une donnée de position finale dans une seconde zone de stationnement (ZT) ;
- un deuxième type de phase (P2) de déplacement d'un aéronef (AC) comprenant un trajet entre une donnée de position initiale dans une zone de stationnement (ZT) et une donnée de position finale dans au moins une voie de roulage (R) ; et
- un troisième type de phase (P3) de déplacement d'un aéronef comprenant un trajet entre une donnée de position initiale dans au moins une voie de roulage (R) et une donnée de position finale dans une zone de stationnement (ZT).

7. Système de génération de données opérationnelles d'au moins une infrastructure aéroportuaire, comportant :
- un module d'acquisition (ACQ) configuré pour acquérir et pour transmettre des ensembles de données de suivi de déplacement pour une pluralité d'aéronefs (AC) présents dans un volume de détection de dimensions prédéterminées autour de l'infrastructure aéroportuaire, chacun desdits ensembles de données de suivi de déplacement étant associé à l'un desdits aéronefs (AC), chacun desdits ensembles de données de suivi de déplacement comprenant des données de position successives et des données de vol de l'aéronef (AC) considéré, une pluralité de données de vol étant associée à chacune desdites données de position ;
- un premier module d'identification (IDEN1) configuré pour identifier une trajectoire pour chacun desdits aéronefs (AC) à partir de l'ensemble de données de suivi de déplacement dudit aéronef (AC) considéré, d'au moins une voie de roulage (R) de l'infrastructure aéroportuaire et d'au moins une zone de stationnement (ZT) de l'infrastructure aéroportuaire ;
- un second module d'identification (IDEN2) configuré pour identifier par découpage des trajectoires en phases de déplacement au sol et pour transmettre, pour chacune desdites trajectoires respectant des conditions prédéterminées, une ou plusieurs phases, chacune desdites phases étant associée à des données de phases, des données de position et des données de vol de chacun desdits aéronefs (AC) ;
- un module de génération (GEN1) configuré pour générer une pluralité de premiers ensembles de données opérationnelles et une pluralité de seconds ensembles de données opérationnelles, chacun desdits premiers ensembles de données opérationnelles comprenant les données de vol et les données de phases associées à l'un desdits aéronefs (AC), chacun desdits seconds ensembles de données opérationnelles comprenant les données de position desdits aéronefs (AC) ; et
- un module de transmission (TRANS) configuré pour transmettre lesdits premiers ensembles de données opérationnelles et lesdits seconds ensembles de données opérationnelles à un système utilisateur,
les données de phases étant un identifiant de phase, un rang de phase dans la trajectoire d'un aéronef (AC), une heure de début de phase et une heure de fin de phase, une durée de phase, un type de phase, une heure de départ ou d'arrivée à une zone de stationnement (ZT) ou sur une voie de roulage (R).

8. Système selon la revendication 7, comportant :
- un premier module de détermination (DET1) configuré pour déterminer au moins une voie de roulage (R), à partir d'un premier ensemble de données d'infrastructures et pour transmettre des données de position de ladite ou desdites voies de roulage (R) ; et
- un second module de détermination (DET2) configuré pour déterminer au moins une zone de stationnement (ZT) à partir d'un second ensemble de données d'infrastructures et pour transmettre des données de position de ladite ou desdites zones de stationnement (ZT).

9. Système selon l'une quelconque des revendications 7 et 8, en ce que le module d'acquisition (ACQ) comporte également un sous-module de sélection (SEL) configuré pour sélectionner les ensembles de données de suivi de déplacement de chacun desdits aéronefs (AC) dont le nombre de données de position est supérieur à un nombre seuil prédéterminé et pour transmettre les ensembles de suivi de déplacement sélectionnés.

10. Système selon la revendication 8, en ce que le second module de détermination (DET2) comporte:
- un sous-module de définition (DEF) configuré pour définir, pour une pluralité de points de stationnement (Gi), une zone de recherche autour de chacun desdits points de stationnement (Gi) dont les coordonnées sont définies dans le second ensemble de données d'infrastructures ;
- un sous-module de génération (GEN2) configuré pour générer un agrégat (Ai) de positions d'aéronefs (AC) proches de chacun des points de stationnement (Gi) à partir de données de position d'entraînement vérifiant une pluralité de critères prédéterminés ;
- un sous-module de filtrage (FILT) configuré pour éliminer les agrégats (Ai) de positions d'aéronefs (AC) dont la distance entre un centre de l'agrégat (Ai) et le point de stationnement (Gi) le plus proche est supérieur à une distance prédéterminée ; et
- un sous-module d'association (ASSO) configuré pour associer chacun des agrégats (Ai) de positions d'aéronefs (AC) qui n'est pas éliminé à une zone de stationnement (ZT).

## Patentansprüche

1. Verfahren zum Erzeugen von Betriebsdaten mindestens einer Flughafeninfrastruktur,
das die folgenden Schritte umfasst:
- einen Erhebungsschritt (E1), der von einem Erhebungsmodul (ACQ) umgesetzt wird, der darin besteht, Bewegungsverfolgungs-Datensätze für eine Vielzahl von Flugzeugen (AC), die in einem Erfassungsraum mit vorbestimmten Abmessungen um die Flughafeninfrastruktur gegenwärtig sind, zu erheben und zu übertragen, wobei jeder der Bewegungsverfolgungs-Datensätze mit einem der Flugzeuge (AC) assoziiert ist, wobei jeder der Bewegungsverfolgungs-Datensätze aufeinanderfolgende Positionsdaten und Flugdaten des betreffenden Flugzeugs (AC) umfasst, wobei eine Vielzahl von Flugdaten mit jeder der Positionsdaten assoziiert ist;
- einen ersten Identifikationsschritt (E4), der von einem ersten Identifikationsmodul (IDEN1) umgesetzt wird, der darin besteht, eine Bahn für jedes der Flugzeuge (AC) ausgehend von dem Bewegungsverfolgungs-Datensatz des betreffenden Flugzeugs (AC), mindestens einer Rollbahn (R) der Flughafeninfrastruktur und mindestens einer Parkzone (ZT) der Flughafenstruktur zu identifizieren;
- einen zweiten Identifikationsschritt (E5), der von einem zweiten Identifikationsmodul (IDEN2) umgesetzt wird, der darin besteht, für jede der Bahnen, die vorbestimmte Bedingungen einhält, eine oder mehrere Phasen durch Aufteilen Bahnen in Bewegungsphasen auf dem Boden zu identifizieren und zu übertragen, wobei jede der Phasen mit Phasendaten, Positionsdaten und Flugdaten jedes der Flugzeuge (AC) assoziiert ist;
- einen Erzeugungsschritt (E6), der von einem Erzeugungsmodul (GEN1) umgesetzt wird, der darin besteht, eine Vielzahl erster Betriebsdatensätze und eine Vielzahl zweiter Betriebsdatensätze zu erzeugen, wobei jeder der ersten Betriebsdatensätze die Flugdaten und die Phasendaten umfasst, die mit einem der Flugzeuge (AC) assoziiert sind, wobei jeder der zweiten Betriebsdatensätze die Positionsdaten der Flugzeuge (AC) umfasst; und
- einen Übertragungsschritt (E7), der von einem Übertragungsmodul (TRANS) umgesetzt wird, der darin besteht, die ersten Betriebsdatensätze und die zweiten Betriebsdatensätze zu einem Benutzersystem zu übertragen,
wobei die Phasendaten ein Phasenidentifikator, ein Phasenrang in der Bahn eines Flugzeugs (AC), eine Phasenstartzeit und eine Phasenendzeit, eine Phasendauer, ein Phasentyp, eine Abfahrt- oder Ankunftszeit in einer Parkzone (ZT) oder auf einer Rollbahn R ist.

2. Verfahren nach Anspruch 1,
das einen ersten Bestimmungsschritt (E2) umfasst, der vor dem ersten Identifikationsschritt (E4) von einem ersten Bestimmungsmodul (DET1) umgesetzt wird, der darin besteht, ausgehend von einem ersten Infrastrukturdatensatz, der Ausrüstungskoordinaten der Flughafeninfrastruktur umfasst, mindestens eine Rollbahn (R) zu bestimmen und zu übertragen, wobei der erste Bestimmungsschritt (E2) darin besteht, auch Positionsdaten der Rollbahn(en) (R) zu übertragen.

3. Verfahren nach einem der Ansprüche 1 und 2,
wobei der Erhebungsschritt (E1) auch einen Auswahlteilschritt (E11) umfasst, der von einem Auswahlteilmodul (SEL) umgesetzt wird, der darin besteht, die Bewegungsverfolgungs-Datensätze jedes der Flugzeuge (AC) auszuwählen, dessen Positionsdatenanzahl größer als eine vorbestimmte Schwellenanzahl ist, und die ausgewählten Bewegungsverfolgungs-Datensätze zu übertragen.

4. Verfahren nach einem der vorstehenden Ansprüche,
das einen zweiten Bestimmungsschritt (E3) umfasst, der vor dem ersten Identifikationsschritt (E4) von einem zweiten Bestimmungsmodul (DET2) umgesetzt wird, der darin besteht, ausgehend von einem zweiten Infrastrukturdatensatz, der Ausrüstungskoordinaten der Flughafeninfrastruktur umfasst, mindestens eine Parkzone (ZT) zu bestimmen und zu übertragen, wobei der zweite Bestimmungsschritt (E3) darin besteht, auch Positionsdaten der Parkzone(n) (ZT) zu übertragen.

5. Verfahren nach Anspruch 4,
wobei der zweite Bestimmungsschritt (E3) die Abfolge der folgenden Teilschritte umfasst:
- einen Definitionsteilschritt (E31), der von einem Definitionsteilmodul (DEF) umgesetzt wird, der darin besteht, für eine Vielzahl von Parkplätzen (Gi) eine Suchzone um jeden der Parkplätze (Gi) zu definieren, deren Koordinaten in dem zweiten Infrastrukturdatensatz definiert sind;
- einen Erzeugungsteilschritt (E32), der von einem Erzeugungsteilmodul (GEN2) umgesetzt wird, der darin besteht, ein Aggregat (Ai) von Positionen von Flugzeugen (AC) nahe jedem der Parkplätze (Gi) ausgehend von Antriebspositionsdaten, die eine Vielzahl vorbestimmter Kriterien erfüllen, zu erzeugen;
- einen Filterteilschritt (E33), der von einem Filterteilmodul (FILT) umgesetzt wird, der darin besteht, die Aggregate (Ai) von Positionen von Flugzeugen (AC) zu eliminieren, deren Abstand zwischen einer Mitte des Aggregats (Ai) und dem am nächsten liegenden Parkplatz (Gi) größer ist als ein vorbestimmter Abstand; und
- einen Assoziationsteilschritt (E34), der von einem Assoziationsteilmodul (ASSO) umgesetzt wird, der darin besteht, jedes der Aggregate (Ai) von Positionen von Flugzeugen (AC), das nicht eliminiert wird, mit einer Parkzone (ZT) zu assoziieren.

6. Verfahren nach einem der vorstehenden Ansprüche,
**dadurch gekennzeichnet, dass** eine Phase mindestens Folgendes umfasst:
- einen ersten Bewegungsphasentyp (P1) eines Flugzeugs (AC), der eine Strecke zwischen einer Anfangspositiondata in einer ersten Parkzone (ZT) und einer Endpositiondata in einer zweiten Parkzone (ZT) umfasst;
- einen zweiten Bewegungsphasentyp (P2) eines Flugzeugs (AC), der eine Strecke zwischen einer Anfangspositiondata in einer ersten Parkzone (ZT) und einer Endpositiondata in mindestens einer Rollbahn (R) umfasst; und
- einen dritten Bewegungsphasentyp (P3) eines Flugzeugs, der eine Strecke zwischen einer Anfangspositiondata in mindestens einer Rollbahn (R) und einer Endpositiondata in einer Parkzone (ZT) umfasst.

7. System zum Erzeugen von Betriebsdaten mindestens einer Flughafeninfrastruktur,
das Folgendes umfasst:
- ein Erhebungsmodul (ACQ), das dazu konfiguriert ist, Bewegungsverfolgungs-Datensätze für eine Vielzahl von Flugzeugen (AC), die in einem Erfassungsraum mit vorbestimmten Abmessungen um die Flughafeninfrastruktur gegenwärtig sind, zu erheben und zu übertragen, wobei jeder der Bewegungsverfolgungs-Datensätze mit einem der Flugzeuge (AC) assoziiert ist, wobei jeder der Bewegungsverfolgungs-Datensätze aufeinanderfolgende Positionsdaten und Flugdaten des betreffenden Flugzeugs (AC) umfasst, wobei eine Vielzahl von Flugdaten mit jeder der Positionsdaten assoziiert ist;
- ein erstes Identifikationsmodul (IDEN1), das dazu konfiguriert ist, eine Bahn für jedes der Flugzeuge (AC) ausgehend von dem Bewegungsverfolgungs-Datensatz des betreffenden Flugzeugs (AC) mindestens eine Rollbahn (R) der Flughafeninfrastruktur und mindestens eine Parkzone (ZT) der Flughafeninfrastruktur zu identifizieren;
- ein zweites Identifikationsmodul (IDEN2), das dazu konfiguriert ist, durch Aufteilen Bahnen in Bewegungsphasen auf dem Boden zu identifizieren und für jede der Bahnen, die vorbestimmte Bedingungen erfüllen, eine oder mehrere Phasen zu übertragen, wobei jede der Phasen mit Phasendaten, Positionsdaten und Flugdaten jedes der Flugzeuge (AC) assoziiert ist;
- ein Erzeugungsmodul (GEN1), das dazu konfiguriert ist, eine Vielzahl erster Betriebsdatensätze und eine Vielzahl zweiter Betriebsdatensätze zu erzeugen, wobei jeder der ersten Betriebsdatensätze die Flugdaten und die Phasendaten umfasst, die mit einem der Flugzeuge (AC) assoziiert sind, wobei jeder der zweiten Betriebsdatensätze die Positionsdaten der Flugzeuge (AC) umfasst; und
- ein Übertragungsmodul (TRANS), das dazu konfiguriert ist, die ersten Betriebsdatensätze und die zweiten Betriebsdatensätze zu einem Benutzersystem zu übertragen,
wobei die Phasendaten ein Phasenidentifikator, ein Phasenrang in der Bahn eines Flugzeugs (AC), eine Phasenstartzeit und eine Phasenendzeit, eine Phasendauer, ein Phasentyp, eine Abfahrt- oder Ankunftszeit in einer Parkzone (ZT) oder auf einer Rollbahn (R) ist.

8. System nach Anspruch 7,
das Folgendes umfasst:
- ein erstes Bestimmungsmodul (DET1), das dazu konfiguriert ist, mindestens eine Rollbahn (R) ausgehend von einem ersten Infrastrukturdatensatz zu bestimmen und Positionsdaten der Rollbahn(en) (R) zu übertragen; und
- ein zweites Bestimmungsmodul (DET2), das dazu konfiguriert ist, mindestens eine Parkzone (ZT) ausgehend von einem zweiten Infrastrukturdatensatz zu bestimmen und Positionsdaten der Parkzone(n) (ZT) zu übertragen.

9. System nach einem der Ansprüche 7 und 8,
wobei das Erhebungsmodul (ACQ) auch ein Auswahlteilmodul (SEL) umfasst, das dazu konfiguriert ist, die Bewegungsverfolgungs-Datensätze jedes der Flugzeuge (AC), dessen Positionsdatenanzahl größer als eine vorbestimmte Schwellenanzahl ist, auszuwählen und die ausgewählten Bewegungsverfolgungs-Datensätze zu übertragen.

10. System nach Anspruch 8,
wobei das zweite Bestimmungsmodul (DET2) Folgendes umfasst:
- ein Definitionsteilmodul (DEF), das dazu konfiguriert ist, für eine Vielzahl von Parkplätzen (Gi) eine Suchzone um jeden der Parkplätze (Gi) zu definieren, deren Koordinaten in dem zweiten Infrastrukturdatensatz definiert sind;
- ein Erzeugungsteilmodul (GEN2), das dazu konfiguriert ist, ein Aggregat (Ai) von Positionen von Flugzeugen (AC) nahe jedem der Parkplätze (Gi) ausgehend von Antriebspositionsdaten, die eine Vielzahl vorbestimmter Kriterien erfüllen, zu erzeugen;
- ein Filterteilmodul (FILT), das dazu konfiguriert ist, die Aggregate (Ai) von Positionen von Flugzeugen (AC) zu eliminieren, deren Abstand zwischen einer Mitte des Aggregats (Ai) und dem am nächsten liegenden Parkplatz (Gi) größer ist als ein vorbestimmter Abstand; und
- ein Assoziationsteilmodul (ASSO), das dazu konfiguriert ist, jedes der Aggregate (Ai) von Positionen von Flugzeugen (AC) das nicht eliminiert wird, mit einer Parkzone (ZT) zu assoziieren.

## Claims

1. Method for generating operational data of at least one airport infrastructure, comprising the following steps:
- an acquisition step (E1), implemented by an acquisition module (ACQ), consisting in acquiring and in transmitting movement tracking data sets for a plurality of aircraft (AC) present in a detection volume of predetermined dimensions around the airport infrastructure, each of the said movement tracking data sets being associated with one of the said aircraft (AC), each of the said movement tracking data sets comprising successive position data and flight data of the aircraft (AC) considered, a plurality of flight data being associated with each of the said position data;
- a first identification step (E4), implemented by a first identification module (IDEN1), consisting in identifying by splitting the paths of the aircraft into movement phases on ground a path for each of the said aircraft (AC) on the basis of the movement tracking data set of the said aircraft (AC) considered, of at least one taxiway (R) of the airport infrastructure and of at least one parking zone (ZT) of the airport infrastructure;
- a second identification step (E5), implemented by a second identification module (IDEN2), consisting in identifying and in transmitting, for each of the said paths complying with predetermined conditions, one or more phases, each of the said phases being associated with phases data, position data and flight data of each of the said aircraft (AC);
- a generation step (E6), implemented by a generation module (GEN1), consisting in generating a plurality of first sets of operational data and a plurality of second sets of operational data, each of the said first sets of operational data comprising the flight data and the phases data associated with one of the said aircraft (AC), each of the said second sets of operational data comprising the position data of the said aircraft (AC); and
- a transmission step (E7), implemented by a transmission module (TRANS), consisting in transmitting the said first sets of operational data and the said second sets of operational data to a user system,
the phases data being a phase identifier, a rank of phase in the path of an aircraft (AC), a phase start time and a phase end time, a duration of phase, a type of phase, a departure or arrival time at a parking zone (ZT) or on a taxiway (R).

2. Method according to Claim 1,
comprising a first determination step (E2), implemented prior to the first identification step (E4) by a first determination module (DET1), consisting in determining and in transmitting, on the basis of a first set of infrastructures data comprising coordinates of facilities of the airport infrastructure, at least one taxiway (R), the said first determination step (E2) also consisting in transmitting position data of the said taxiway or taxiways (R).

3. Method according to either one of Claims 1 and 2,
in that the acquisition step (E1) also comprises a selection sub-step (E11), implemented by a selection sub-module (SEL), consisting in selecting the movement tracking data sets of each of the said aircraft (AC) whose number of position data is greater than a predetermined threshold number and to transmit the selected movement tracking sets.

4. Method according to any one of the preceding claims,
comprising a second determination step (E3), implemented prior to the first identification step (E4) by a second determination module (DET2), consisting in determining and in transmitting, on the basis of a second set of infrastructures data comprising coordinates of facilities of the airport infrastructure, at least one parking zone (ZT), the said second determination step (E3) also consisting in transmitting position data of the said parking zone or zones (ZT).

5. Method according to Claim 4,
in that the second determination step (E3) comprises the succession of following sub-steps:
- a definition sub-step (E31), implemented by a definition sub-module (DEF), consisting in defining, for a plurality of parking points (Gi), a search zone around each of the said parking points (Gi) whose coordinates are defined in the second set of infrastructures data;
- a generation sub-step (E32), implemented by a generation sub-module (GEN2), consisting in generating an aggregate (Ai) of positions of aircraft (AC) which are close to each of the parking points (Gi) on the basis of training position data satisfying a plurality of predetermined criteria;
- a filtering sub-step (E33), implemented by a filtering sub-module (FILT), consisting in eliminating the aggregates (Ai) of positions of aircraft (AC) whose distance between a centre of the aggregate (Ai) and the closest parking point (Gi) is greater than a predetermined distance; and
- an association sub-step (E34), implemented by an association sub-module (ASSO), consisting in associating each of the aggregates (Ai) of positions of aircraft (AC) which is not eliminated with a parking zone (ZT).

6. Method according to any one of the preceding claims,
in that a phase comprises at least:
- a first type of phase (P1) of movement of an aircraft (AC) comprising a journey between a datum of initial position in a first parking zone (ZT) and a datum of final position in a second parking zone (ZT);
- a second type of phase (P2) of movement of an aircraft (AC) comprising a journey between a datum of initial position in a parking zone (ZT) and a datum of final position in at least one taxiway (R); and
- a third type of phase (P3) of movement of an aircraft comprising a journey between a datum of initial position in at least one taxiway (R) and a datum of final position in a parking zone (ZT).

7. System for generating operational data of at least one airport infrastructure, comprising:
- an acquisition module (ACQ) configured to acquire and to transmit movement tracking data sets for a plurality of aircraft (AC) present in a detection volume of predetermined dimensions around the airport infrastructure, each of the said movement tracking data sets being associated with one of the said aircraft (AC), each of the said movement tracking data sets comprising successive position data and flight data of the aircraft (AC) considered, a plurality of flight data being associated with each of the said position data;
- a first identification module (IDEN1) configured to identify by splitting the paths of the aircraft into movement phases on ground a path for each of the said aircraft (AC) on the basis of the movement tracking data set of the said aircraft (AC) considered, of at least one taxiway (R) of the airport infrastructure and of at least one parking zone (ZT) of the airport infrastructure;
- a second identification module (IDEN2) configured to identify and to transmit, for each of the said paths complying with predetermined conditions, one or more phases, each of the said phases being associated with phases data, position data and flight data of each of the said aircraft (AC);
- a generation module (GEN1) configured to generate a plurality of first sets of operational data and a plurality of second sets of operational data, each of the said first sets of operational data comprising the flight data and the phases data associated with one of the said aircraft (AC), each of the said second sets of operational data comprising the position data of the said aircraft (AC); and
- a transmission module (TRANS) configured to transmit the said first sets of operational data and the said second sets of operational data to a user system,
the phases data being a phase identifier, a rank of phase in the path of an aircraft (AC), a phase start time and a phase end time, a duration of phase, a type of phase, a departure or arrival time at a parking zone (ZT) or on a taxiway (R).

8. System according to Claim 7,
comprising:
- a first determination module (DET1) configured to determine at least one taxiway (R), on the basis of a first set of infrastructures data and to transmit position data of the said taxiway or taxiways (R); and
- a second determination module (DET2) configured to determine at least one parking zone (ZT) on the basis of a second set of infrastructures data and to transmit position data of the said parking zone or zones (ZT).

9. System according to either one of Claims 7 and 8,
in that the acquisition module (ACQ) also comprises a selection sub-module (SEL) configured to select the movement tracking data sets of each of the said aircraft (AC) whose number of position data is greater than a predetermined threshold number and to transmit the selected movement tracking sets.

10. System according to Claim 8,
in that the second determination module (DET2) comprises:
- a definition sub-module (DEF) configured to define, for a plurality of parking points (Gi), a search zone around each of the said parking points (Gi) whose coordinates are defined in the second set of infrastructures data;
- a generation sub-module (GEN2) configured to generate an aggregate (Ai) of positions of aircraft (AC) which are close to each of the parking points (Gi) on the basis of training position data satisfying a plurality of predetermined criteria;
- a filtering sub-module (FILT) configured to eliminate the aggregates (Ai) of positions of aircraft (AC) whose distance between a centre of the aggregate (Ai) and the closest parking point (Gi) is greater than a predetermined distance; and
- an association sub-module (ASSO) configured to associate each of the aggregates (Ai) of positions of aircraft (AC) which is not eliminated with a parking zone (ZT).
